# EUROPEAN PATENT SPECIFICATION

(11) **EP 1 057 235 B1**
(45) Date of publication and mention of the grant of the patent: **02.10.2002**
(21) Application number: 99902712.1
(22) Date of filing: 29.01.1999
(51) Int. Cl.: H02J 7/00

(54) **POWER SUPPLIES FOR ECUs**
STROMVERSORGUNGEN FÜR ELEKTRONISCHE STEUEREINRICHTUNGEN
ALIMENTATION POUR DES UNITES DE COMMANDE ELECTRONIQUE

(30) Priority: 24.02.1998 GB 9803723
(43) Date of publication of application: 06.12.2000
(73) Proprietor: LUCAS INDUSTRIES public limited company, London W1Y 4DJ (GB)
(72) Inventor: DAVIES, Garry, Raymond, Rugby CV21 4DA (GB)
(74) Representative: W.P. Thompson & Co.
(86) International application number: PCT/GB99/00322
(87) International publication number: WO 99/044267

(56) References cited:
- EP-A- 0 632 562
- US-A- 4 593 338
- PATENT ABSTRACTS OF JAPAN vol. 004, no. 163 (P-036), 13 November 1980 & JP 55 112618 A (NIPPON PRECISION SAAKITSUTSU KK), 30 August 1980

## Description

The present invention relates to power supplies for microprocessors acting as electronic control units/controllers (ECUs) in vehicles and is concerned principally with "Load Dump" protection and on/off control of such devices.

Automotive controllers must be able to withstand without damage, high energy transients on the controllers B⁺ supply, referred to as "Load Dump". It is often desired to have the controller fully functional during a "Load Dump". Most voltage regulators have some form of built-in "Load Dump" protection which may involve having the voltage regular shut down during such a "Load Dump". Thus, it is a requirement that the controller must not be damaged by a "Load Dump". Also, the controller may have to operate and be fully functional, during a "Load Dump".

The voltage regulator in the controller may have to operate up to an ambient temperature of +125°C. The power dissipated in the regulator is equal to (Supply Voltage - Output Voltage) X Pass Current. When the vehicle has a defective alternator, or during a heavy charging, the B⁺ voltage could be as high as 18V. During boost starting, the battery voltage may be as high as 25V for 5 minutes. The controller may have to be fully functional during high battery voltages and boost starting. Furthermore, the controller may have to operate down to a low battery voltage during engine cranking. To achieve the lowest operating voltage, any component prior to the voltage regulator must impose as small a voltage drop as possible, in order to extend the controllers operating voltage, as much as possible.

The controller may be connected to the vehicle's B⁺ supply at all times but be enabled remotely. When the device is enabled remotely, the controller may then hold on after the remote enable control signal becomes non active. The controller must have a very low quiescent when not active.

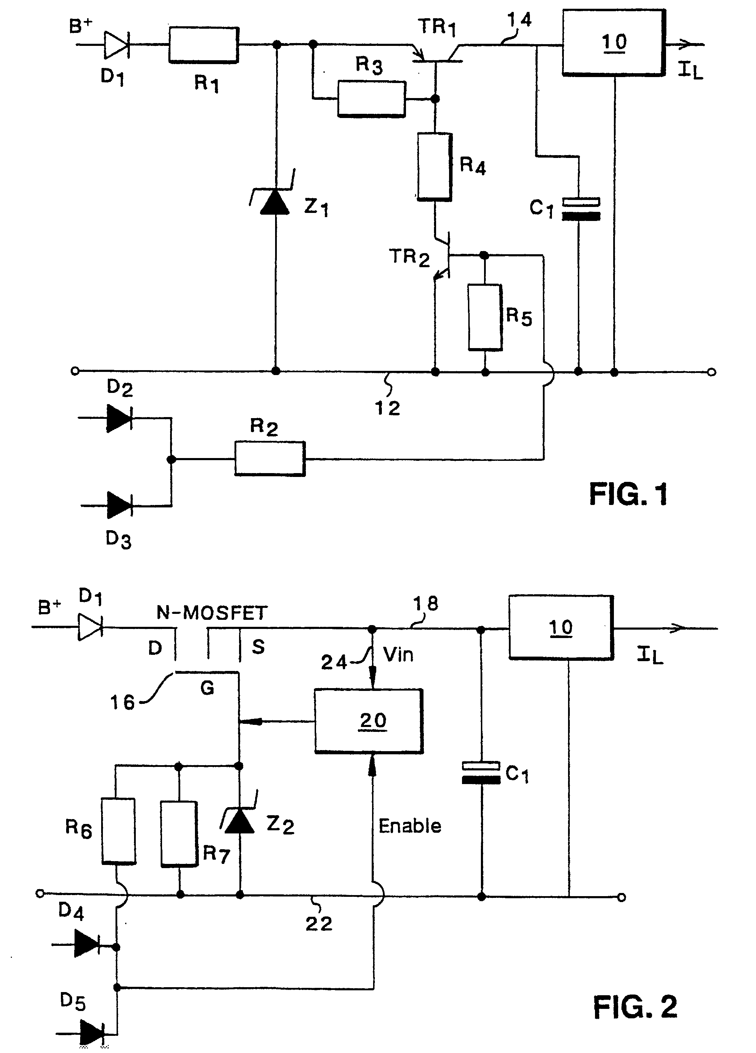

Conventional circuitry for providing the aforegoing "Load Dump" function comprises a series resistor in the B⁺ line upstream of the regulator and a Zener diode in parallel with the regulator input. An example of such a circuit is shown in Fig. 1 of the attached drawings. Fig. 1 shows a voltage regulator 10 coupled to a voltage supply B⁺ by way of a diode D₁ and resistor R₁, with a Zener diode Z₁ and an electrolytic capacitor C₁ both connected between the regulator input and the other supply line 12.

For allowing remote switching on and off of the voltage regulator, this circuit also includes a switching transistor Tr₁ in the regulator input line 14 which can be controlled by way of a second transistor Tr₂ by means of enabling signals introduced via respective diodes D₂ and D₃. The switching levels are controlled by means of resistors R₃, R₄ and R₅.

Using this known circuit, reverse voltages are blocked by the diode D₁. Over-voltage transients are absorbed by the combination of R₁ and D₁. Tr₁ and Tr₂ constitute a high side switch which enables the voltage regulator to be selectively connected to the B⁺ supply. The capacitor C₁ stores charge such as to enable the voltage regulator to continue working during negative spikes and during temporary interruptions in the B⁺ supply.

The value of resistor R₁ is selected to stop excessive current flowing through and damaging the Zener diode Z₁. The value of resistor R₁ will give a voltage drop that will impair the low operating performance of the controller. The latter problem is typically worse when the load current is normally high. The rated voltage of the capacitor must be at least the maximum clamp voltage of the Zener diode Z₁.

This known circuit has the disadvantages that:
a) R₁ impedes low voltage working operation
b) If Z₁ is damaged (open circuit), the controller's operation is impaired and the voltage regulator may shut down or be over-stressed.
c) Z₁ is a redundant operation component during normal operation.
d) The rated working voltage of C₁ should be the clamp voltage of Z₁; this can result in C₁ having a physically large component size.
e) The voltage regulator will always see the battery voltage B⁺ when the circuit is on; this can cause excessive heat dissipation in the voltage regulator junction.

From DE-A-4110495 there is known a semiconductor electronic circuit having a protection device for protecting against supply voltage overloading. By means of a first Zener diode, a supply voltage is pre-regulated by a first transistor acting as a nonlinear resistance. If a load-dump voltage occurs on the voltage supply line, the current through the nonlinear resistance is blocked by the use of a second Zener diode which becomes conductive if the supply voltage exceeds an operating value, whereby a further transistor also becomes conductive and the control current at the base electrode of the first transistor is reduced. Eventually, the non-linear resistance provided by the first transistor effectively reaches a non-conductive state.

From JP-A-55112618 it is known to use an N-MOSFET whose gate is arranged to be held at a substantially fixed potential and whose drain and source are connected between the source and the load. When the power supply voltage increases and the drain current is going to increase, the gate potential is lowered to the source potential, the increase in the drain current is restricted, and the voltage fed to the load is not increased.

EP-A-0632562 is not concerned with overload protection but rather with a voltage regulator circuit which includes a variable impedance. A regulator circuit supplies a regulated low, DC voltage that is derived from an unregulated voltage provided by a pair of redundant batteries. The regulator circuit comprises regulation control that responds to a feedback signal developed from monitoring the regulated voltage to maintain the regulated voltage at a desired level. Battery monitors supervise the voltage levels of the batteries used, and shut down the regulator when the battery voltages drop below a predetermined voltage level to preserve battery life.

In accordance with the present invention, there is provided a voltage supply circuit according to claim 1.

Thus, at least above a predetermined lower operating level, eg 7 volts, the resistance introduced between the B⁺ supply and the voltage regulator increases as the value of the B⁺ supply voltage increases.

Advantageously, an enabling signal for the charge pump is also arranged to be provided to the gate of the N-MOSFET for initial powering up purposes.

The invention is described further hereinafter, by way of example, with reference to the accompanying drawings, in which:-
FIG. 1 is a circuit diagram of a known arrangement providing an ON/OFF function and "Load Dump" dissipation; and
FIG. 2 is a circuit diagram of one embodiment of a circuit in accordance with the present invention.

Referring to Fig. 2, the embodiment in accordance with the present invention comprises a voltage regulator 10 which is coupled to a vehicle B⁺ supply via a diode D₁, and an N-MOSFET 16 source follower, whose source S is connected to the input line 18 to the voltage regulator 10 and whose drain D is connected to the diode D₁. The gate G of the N-MOSFET 16 is connected firstly to the output of a charge pump 20, secondly to the other supply line 22 by the parallel connection of a zener diode Z₂ and a resistor R₇ and thirdly to a pair of enabling diodes D₄ and D₅ by way of a resistor R₆. The diodes D₄ and D₅ are also connected to an enable input of the charge pump 20, the latter charge pump 20 having a power supply line 24 connected to the regulator input line 18. As before, an electrolytic capacitor C₁ is placed between the rails 18,22. This circuit operates as follows.

Whenever the voltage Vs at the source of the N-MOSFET is less than the voltage V_{G} on its gate, the N-MOSFET will conduct. Otherwise, it is non-conductive and effectively provides a high resistance. Thus, when the N-MOSFET is non-conductive, the voltage on the line 18 is held low and the voltage regulator is OFF and supplies no current to the ECU disposed downstream (not shown).

For powering up, an enable signal (normally battery voltage B⁺) is applied to one of the enable diodes D₄, D₅. This raises the voltage at the gate of the N-MOSFET to battery voltage so that it is then at a higher voltage than the source Vs. Thus enables the N-MOSFET to start conducting. The enable signal is also applied to the charge pump and this results in the charge pump rapidly increasing the gate voltage V_{G} up to 12v, thus switching the MOSFET further ON so that it acts as a PRE-voltage regulator.

Once the MOSFET has begun to conduct, the voltage on line 18 rises, supplying an energising voltage for the charge pump 20 via line 24 which, in the case of enabling pulses, maintains its operation when the enabling signal pulse has ended. The gate voltage V_{G} is then maintained at a fixed potential by virtue of the charge pump and the zener Z₂. The voltage at the source 5 is typically 2v less than the voltage on the gate. Whenever the supply voltage is less than the gate voltage, the N-MOSFET becomes more enhanced until it is fully ON (conductive) when typically the battery voltage is about 7 volts (or below). When the MOSFET is fully on, the voltage drop prior to the voltage regulator is at a minimum. However, as the battery voltage rises (for whatever reason), the MOSFET becomes progressively more resistive since the condition that Vs is less that V_{G} eventually no longer applies. "Load Dump" energy, which in the conventional circuitry would be absorbed in the voltage regulator junction, is then absorbed in the MOSFET junction. The result of this operation is that as B⁺ rises above its normal level, the MOSFET becomes progressively more resistive such as to hold Vs at a substantially fixed voltage, typically of the order of 10v.

The above described circuit of Fig. 2 thus provides the functions of:
a) switching the controller ON/OFF;
b) providing "Load Dump" protection upstream of the voltage regulator;
c) extending the operational voltage range of the controller; and
d) providing PRE-regulation to minimise heat dissipated in the voltage regulator.

Furthermore, the circuit of Fig. 2 enables the following advantages to be obtained, namely:
1. The rated voltage of capacitor C can be lower, significantly improving the use of available stored energy potential of capacitor C.
2. The power normally dissipated in the Voltage Regulator junction is reduced because of PRE-Voltage Regulating function absorbs energy that would be dissipated in the voltage regulator junction.
3. A wider selection of voltage regulators can be used.
4. The controller can operate down to a lower supply voltage.
5. The controller can operate up to a higher voltage.
6. The controller is fully functional during a load dump, and boost start condition.
7. The controller has significant thermal advantages.
8. The operation of the "Load Dump" protection can be tested.
9. The clamping voltage of a "Load Dump" is the same as the PRE-regulator voltage.

## Claims

1. A voltage supply circuit for an ECU of the type in which a supply voltage is connected to a voltage regulator (10) via a control device, wherein, at least above a predetermined lower operating value, the control device is adapted to introduce resistance of progressively higher value between the supply voltage (B⁺) and the voltage regulator in dependence upon increasing values of the supply voltage (B⁺) whereby to progressively isolate the voltage regulator (10) from the supply voltage (B⁺), **characterised in that** the control device is arranged to disconnect the voltage regulator from the supply line (B⁺) until activated by a remote enabling signal, the control device comprises an N-MOSFET whose drain (D) and source(s) are connected between the one side (B⁺) of the supply line and the voltage regulator (10) and whose gate (G) is arranged to be held at a substantially fixed potential by being connected firstly to the output of a charge pump (20) and secondly to the other side (22) of the supply line via a Zener diode (Z₂), and the charge pump (20) being adapted to be energisable via a connection to the supply line (B⁺), downstream of the N-MOSFET.

2. A voltage supply circuit as claimed in claim 1, wherein an enabling signal for the charge pump (20) is also arranged to be provided to the gate of the N-MOSFET for initial powering up purposes.

## Patentansprüche

1. Spannungsversorgungsschaltung für eine ECU der Art, bei der eine Versorgungsspannung über eine Steuervorrichtung mit einem Spannungsregler (10) verbunden ist, wobei mindestens oberhalb eines vorherbestimmten unteren Betriebswertes die Steuervorrichtung dafür ausgelegt ist, einen Widerstand eines zunehmend höheren Wertes zwischen der Versorgungsspannung (B⁺) und dem Spannungsregler abhängig von zunehmenden Werten der Versorgungsspannung (B⁺) einzufügen, um dadurch den Spannungsregler (10) fortschreitend von der Versorgungsspannung (B⁺) zu isolieren, **dadurch gekennzeichnet, dass** die Steuervorrichtung so angeordnet ist, dass sie den Spannungsregler von der Versorgungsleitung (B⁺) trennt, bis sie von einem entfernten Aktivierungssignal aktiviert wird, dass die Steuervorrichtung einen N-MOSFET umfasst, dessen Drainelektrode (D) und Sourceelektrode(n) zwischen der einen Seite (B⁺) der Versorgungsleitung und dem Spannungsregler (10) angeschlossen sind und dessen Gatelektrode (G) so angeordnet ist, dass sie auf einem im Wesentlichen festen Potential gehalten wird, indem sie erstens mit dem Ausgang einer Ladungspumpe (20) und zweitens über eine Zener-Diode (Z₂) mit der anderen Seite (22) der Versorgungsleitung verbunden ist und die Ladungspumpe (20) so ausgelegt ist, dass sie über eine Verbindung zu der Versorgungsleitung (B⁺), die dem N-MOSFET nachgeschaltet ist, gespeist werden kann.

2. Spannungsversorgungsschaltung nach Anspruch 1, wobei ein Aktivierungssignal für die Ladungspumpe (20) ebenfalls so ausgelegt ist, dass es der Gateelektrode des N-MOSFET für anfängliche Einschaltzwecke zugeführt wird.

## Revendications

1. Circuit d'alimentation de tension d'une ECU du type dans lequel une tension d'alimentation est connectée à un régulateur de tension (10) par l'intermédiaire d'un dispositif de commande, dans lequel, au moins au-dessus d'une valeur opérationnelle inférieure prédéterminée, le dispositif de commande est adapté pour introduire une résistance de valeur progressivement supérieure entre la tension d'alimentation (B⁺) et le régulateur de tension en fonction de valeurs croissantes de la tension d'alimentation (B⁺) pour isoler progressivement le régulateur de tension (10) de la tension d'alimentation (B⁺), **caractérisé en ce que** le dispositif de commande est agencé pour déconnecter le régulateur de tension du rail d'alimentation (B⁺) jusqu'à ce qu'il soit activé par un signal d'activation à distance, le dispositif de commande comprend un MOSFET N dont le drain (D) et la ou les sources sont connectées entre le côté (B⁺) du rail d'alimentation et le régulateur de tension (10) et dont la grille (G) est agencée pour être maintenue à un potentiel sensiblement fixe en étant connectée premièrement à la sortie d'une pompe de charge (20) et deuxièmement à l'autre côté (22) du rail d'alimentation par une diode Zener (Z₂), et la pompe de charge (20) étant adaptée pour être excitable par l'intermédiaire d'une connexion au rail d'alimentation (B⁺), en aval du MOSFET N.

2. Circuit d'alimentation de tension selon la revendication 1, dans lequel un signal d'activation de la pompe de charge (20) est aussi agencé pour être fourni à la grille du MOSFET N à des fins de mise sous tension initiale.
